# FASCICULE DE BREVET EUROPEEN

(11) **EP 2 723 995 B1**
(45) Date de publication et mention de la délivrance du brevet: **10.10.2018**
(21) Numéro de dépôt: 12731597.6
(22) Date de dépôt: 21.06.2012
(51) Int. Cl.: F02C 7/36, F02C 7/32, F01D 25/16, F02C 7/06, B60K 25/06, B64D 41/00

(54) **RELAIS D'ACCESSOIRES À DURÉE DE VIE AMELIORÉE**
ZUSÄTZLICHES RELAIS MIT VERLÄNGERTER LEBENSDAUER
ACCESSORY RELAY HAVING AN EXTENDED SERVICE LIFE

(30) Priorité: 24.06.2011 FR 1155626
(43) Date de publication de la demande: 30.04.2014
(73) Titulaire: Safran Aircraft Engines, 75015 Paris (FR); Safran Transmission Systems, 92700 Colombes (FR)
(72) Inventeur: VIEL, Julien, F-95100 Argenteuil (FR); DESME, Guy, F-77550 Moissy-Cramayel (FR); GALLO, Claude, F-77550 Moissy-Cramayel (FR)
(74) Mandataire: Gevers & Orès
(86) Numéro de dépôt international: PCT/FR2012/051423
(87) Numéro de publication internationale: WO 2012/175884

(56) Documents cités:
- EP-A1- 1 574 688
- EP-A1- 1 994 269
- DE-C- 954 481
- FR-A1- 2 556 413
- FR-A1- 2 897 895
- FR-A1- 2 905 985
- US-A1- 2008 053 257

## Description

Le domaine de la présente invention est celui des turbomachines et, plus particulièrement, celui de leur boîtier d'accessoires, connus généralement sous le nom de relais d'accessoires ou sous la dénomination anglaise d'"Accessory Gear Box" (AGB).

Une partie de la puissance générée par un turboréacteur est utilisée pour alimenter en énergie différents équipements du turboréacteur. Cette puissance est prélevée mécaniquement sur l'arbre du corps haute pression (HP) du turboréacteur par un arbre de prise de mouvement qui entraîne un arbre d'entrée dans le relais d'accessoires. Ce boîtier contient un certain nombre d'engrenages reliés à des équipements ou accessoires, comme par exemple un générateur électrique, un démarreur, un alternateur, des pompes hydrauliques, à carburant ou à huile, etc. Ces divers accessoires sont entraînés mécaniquement par l'arbre d'entrée dans l'AGB qui leur transmet à chacun, par l'intermédiaire des engrenages de l'AGB, une partie de la puissance prélevée sur l'arbre HP.

L'AGB comporte généralement un boîtier fabriqué par fonderie en un alliage d'aluminium, qui forme un logement, fermé en dessus et en dessous par deux parois sensiblement parallèles, dans lequel sont disposées les roues d'engrenage qui entraînent les accessoires. Chaque roue d'engrenage comporte un arbre qui est apte à recevoir l'arbre d'entraînement d'un accessoire et l'une d'entre elles est reliée également à l'arbre d'entrée dans l'AGB. Les différents accessoires entraînés par l'AGB sont montés directement sur le boîtier de fonderie, les arbres d'entraînement de ces accessoires passant au travers de découpes pratiquées dans une des parois de ce boîtier pour entraîner ceux-ci et dimensionnées pour permettre le montage de la roue d'engrenage correspondante à l'intérieur du boîtier. Les roues d'engrenage sont positionnées dans le boîtier de fonderie en étant portées, d'un côté, par celle des parois du boîtier qui est opposée à la découpe de passage de son arbre d'entraînement et, de l'autre, par un couvercle amovible qui se fixe sur la paroi découpée du boîtier. En règle générale, sans que cette configuration soit impérative, l'arbre de la roue d'engrenage est porté, d'une part, par la bague externe d'un roulement à rouleaux fixé sur la paroi de fond non découpée du boîtier et, d'autre part, par la bague externe d'un roulement à billes fixé sur le couvercle associé audit accessoire.
De telles configurations sont décrites, par exemple, dans les demandes de brevet FR 2556413 ou DE 954481 qui portent sur des relais d'accessoires dans lesquels les arbres d'entraînement des accessoires sont portés par des roulements dont les bagues extérieures sont portées par le boîtier du relais.
Or le métal généralement utilisé en aéronautique pour réaliser le boîtier du relais d'accessoires est un alliage d'aluminium connu sous la dénomination AFNOR d'AS7G06 (ou A357 en dénomination commerciale), qui possède une faible masse et qui présente des caractéristiques mécaniques intéressantes. Le couvercle est, quant à lui, réalisé dans un autre alliage d'aluminium, dénommé commercialement AU2GN (soit AlCu2MgNi ou 2618A en dénomination AFNOR). Ce dernier présente entre autres l'avantage de conserver une bonne résistance mécanique même si la température augmente, jusqu'à une valeur de l'ordre de 150°C.
L'alliage AS7G06 présente en revanche l'inconvénient de voir sa dureté se dégrader en température et des ébranlements des goujons qui fixent la bague extérieure d'un roulement à rouleaux ont été relevés sur des moteurs en utilisation. Les incidents rencontrés résultent en fait d'un échauffement du carter dû à un accessoire, comme par exemple un alternateur à aimant permanent qui fournit un flux thermique important et chauffe l'alliage d'aluminium au point que celui-ci atteint une température critique, ou bien encore d'un niveau vibratoire élevé qui est généré par ce même accessoire ou par l'arbre d'entrée dans l'AGB.
La présente invention a pour but de remédier à ces inconvénients en proposant un boîtier d'accessoires amélioré, c'est-à-dire, en particulier, dans lequel la tenue des moyens de fixation des roues d'engrenages ne se dégrade pas lorsque la température de fonctionnement de l'AGB augmente.

A cet effet, l'invention a pour objet un relais d'accessoires pour turbomachine selon la revendication 1 comportant un boîtier dans lequel est installée au moins une roue d'engrenage pour l'entraînement mécanique d'un accessoire monté sur ledit boîtier, l'engrenage de ladite roue étant entraîné par l'intermédiaire d'un arbre d'entrée fournissant le couple nécessaire audit entraînement mécanique, l'arbre de ladite roue étant porté par au moins deux roulements, à bille ou à rouleaux, et traversant au moins une des parois dudit boîtier par une ouverture positionnée en vis-à-vis dudit accessoire et fermée par un premier couvercle d'accessoire fixé sur le boîtier, caractérisé en ce que, pour au moins une des roues d'engrenage, son arbre traverse deux parois du boîtier au moyen d'ouvertures fermées par des couvercles fixés sur ledit boîtier et en ce que les bagues extérieures desdits deux roulements sont portées par lesdits couvercles.
Le transfert du support roulement depuis le boîtier vers un de ses couvercles permet, en choisissant un métal plus résistant à la chaleur que l'alliage du boîtier, d'augmenter la durée de vie du relais d'accessoires, en diminuant les dommages subis du fait de l'échauffement du boîtier au niveau des roulements des roues d'engrenages. Avantageusement ladite roue d'engrenage est couplée à l'arbre d'entrée en sus de son couplage à un accessoire porté par ledit boîtier, la bague extérieure d'un desdits roulements étant fixée sur le couvercle associé à l'arbre d'entrée et la bague extérieure de l'autre roulement étant fixée sur le couvercle associé à l'arbre dudit accessoire.
Préférentiellement ladite roue d'engrenage est couplée à un alternateur.
Dans un mode particulier de réalisation ledit couvercle associé audit accessoire comporte une extension cylindrique axiale s'étendant à l'intérieur de ladite ouverture correspondante.
Avantageusement ladite extension cylindrique axiale coopère avec ladite ouverture correspondante pour assurer le positionnement dudit couvercle sur ledit boîtier.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
Sur ces dessins :
- la figure 1 est une vue partielle, en coupe, d'un relais d'accessoires selon l'art antérieur ,
- la figure 2 est une vue partielle, en coupe, d'un relais d'accessoires selon un mode de réalisation de l'invention ;
- la figure 3 est une vue en perspective du boîtier du relais d'accessoires de la figure 2 et d'un de ses couvercles, et
- la figure 4 est une vue en perspective du montage de la bague extérieure d'un roulement sur le couvercle de la figure 3.

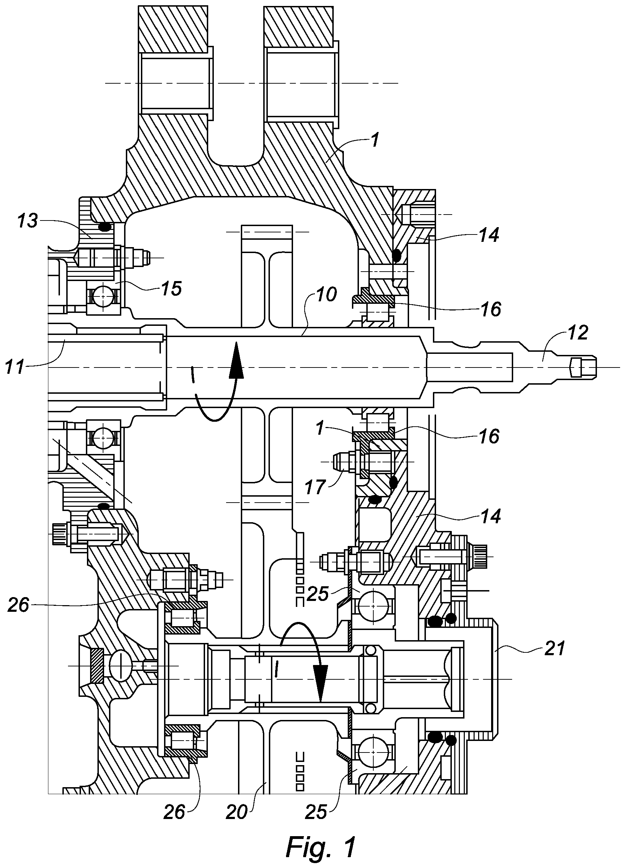

En se référant à la figure 1, on voit, en coupe, une extrémité du relais d'accessoires d'une turbomachine, selon l'art antérieur. Celui-ci est constitué d'un boîtier, réalisé en AS7G06, dans lequel sont disposés des engrenages destinés à recevoir l'arbre d'entraînement d'un des accessoires rattachés au relais d'accessoires. Sur la figure sont représentés deux engrenages : le premier 10 est rattaché à l'arbre d'entrée 11 dans l'AGB et comporte une extension 12 formant arbre d'entraînement d'un accessoire, en l'occurrence, ici, un alternateur à aimant permanent (non représenté) ; le second 20 ne comporte qu'un moyeu dans lequel peut s'implanter un arbre d'entraînement, comme par exemple un arbre pour un entraînement manuel du train d'engrenages.
Une fois que les roues d'engrenage sont en place dans le boîtier 1, les ouvertures par lesquelles passent les axes d'entraînement des accessoires sont refermées par des couvercles de façon à assurer l'étanchéité de l'ensemble et à assurer le portage d'un des roulements de l'arbre de la roue d'engrenage. Dans le cas du premier engrenage 10, un couvercle d'arbre d'entrée 13 referme l'ouverture située du côté de l'arbre d'entrée 11 et un premier couvercle d'entraînement d'accessoire 14 referme l'ouverture que traverse le premier arbre d'entraînement 12. Le premier couvercle 14 referme également l'ouverture par laquelle passe l'arbre de la seconde roue d'engrenage 20. De plus, l'accès au second engrenage est fermé par un second couvercle 21, lorsque cet engrenage n'est pas utilisé. On remarque sur chacun des engrenages qu'ils sont portés par des roulements : un roulement à bille maintenu en place par le couvercle refermant l'ouverture permettant le passage de l'arbre d'entraînement correspondant et un roulement à rouleaux qui est fixé sur la paroi de fond correspondante du boîtier 1, c'est-à-dire la paroi opposée à celle dans laquelle est pratiquée l'ouverture de passage de l'arbre correspondant. La bague extérieure 15 du roulement à bille du premier engrenage 10 est ainsi fixée sur le couvercle d'arbre d'entrée 13 par des moyens du type vis-écrous ou goujons-écrous alors que la bague extérieure 16 du roulement à rouleaux de ce même premier engrenage est fixée directement sur le fond du boîtier 1, là encore par des moyens d'assemblage 17 du type vis-écrous ou goujons-écrous. Il en est de même pour le second engrenage, dont la bague extérieure 25 de son roulement à billes est fixée sur le premier couvercle d'entraînement d'accessoires 14 (qui, comme indiqué précédemment, est commun pour les ouvertures des deux premiers engrenages) alors que celle 26 de son roulement à rouleaux est fixée sur le fond correspondant du boîtier 1.
Le problème rencontré avec cet art antérieur est que les moyens de fixation 17 de la bague extérieure 16 du roulement à rouleaux sont fortement sollicités par les vibrations générées par l'arbre d'entrée et/ou par l'alternateur à aimant permanent et que le métal constituant le boîtier perd ses caractéristiques de dureté lorsque la température augmente. Or il se trouve que la présence d'un alternateur, tel qu'un alternateur à aimant permanent, en bout du premier arbre d'entraînement 12 est de nature à engendrer une telle augmentation de température. On a ainsi constaté des dégradations de la tenue des moyens de fixation 17 de la bague extérieure dans le métal du boîtier 1.

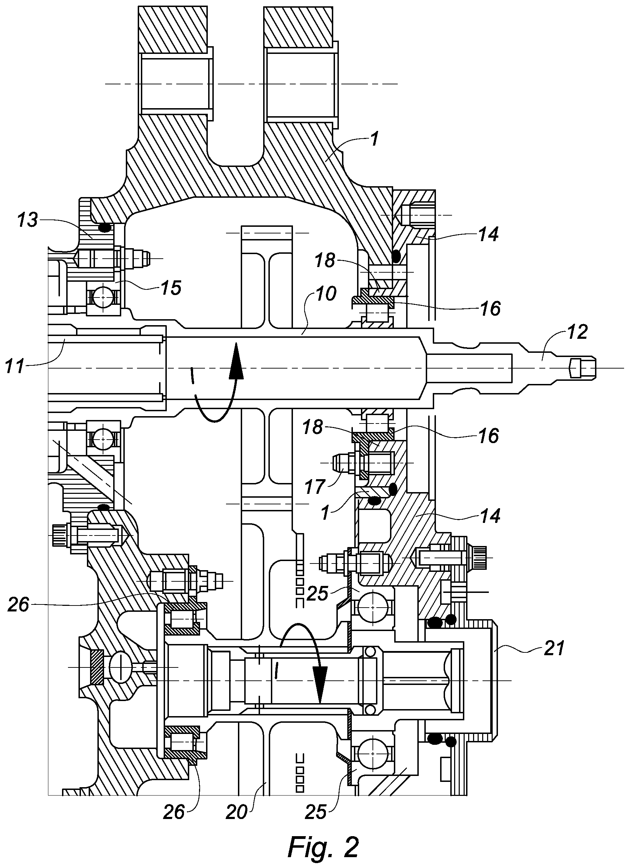

La figure 2 montre le même relais d'accessoires, modifié selon l'invention. Les éléments ayant la même fonction que ceux de la figure 1 portent le même numéro et les éléments non modifiés ne sont pas décrits à nouveau.
Dans cette configuration la bague extérieure du roulement à rouleaux 16 du premier engrenage n'est plus fixée sur le boîtier 1 en AS7G06, mais sur une extension 18 du couvercle 14 correspondant, qui s'étend axialement (en référence à la direction de l'arbre d'entraînement de l'accessoire correspondant) et qui pénètre à l'intérieur de l'ouverture 19 pratiquée dans le boîtier 1. La tenue de la bague extérieure du roulement à rouleaux est alors assurée par un alliage d'aluminium AU2GN, qui résiste mieux à la température que l'alliage constituant le boîtier. A la différence de l'art antérieur le boîtier 1 ne comporte pas de moyen de fixation pour la bague extérieure du roulement à rouleaux du premier engrenage 10, ni de moyen pour le centrage de cette bague par rapport au boîtier 1. L'ensemble de ces moyens est reporté sur le couvercle d'entraînement d'accessoire 14.

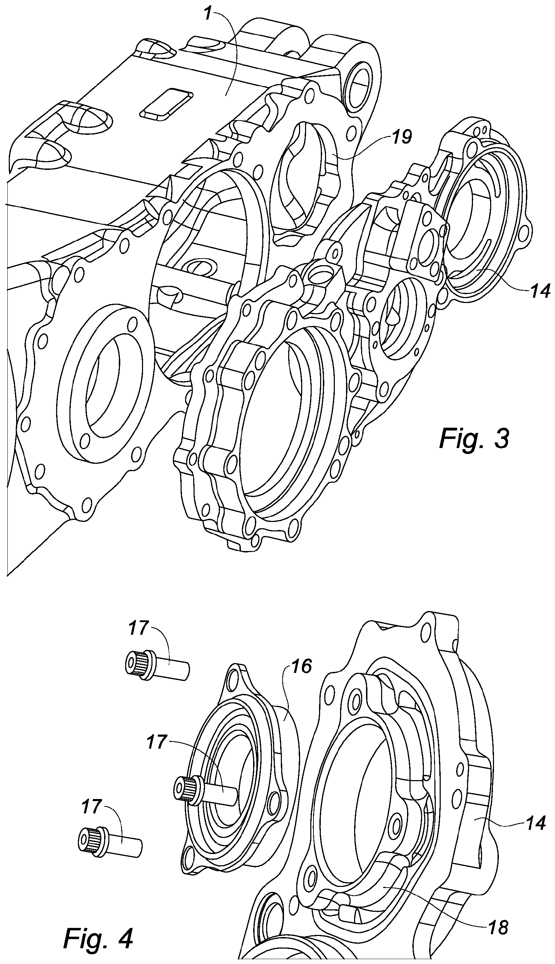

La figure 3 montre en perspective la même partie du boîtier 1 de relais d'accessoires que celle de la figure 2, avec les ouvertures sur une des ses parois qui sont refermées en utilisation par le premier couvercle d'entraînement d'accessoires 14.
La figure 4 montre la façon dont la bague extérieure 16 du roulement à rouleaux du premier engrenage 10 est fixée sur le couvercle d'entraînement d'accessoires 14. Alors que dans l'art antérieur la face du couvercle 14 qui fait face au boîtier 1 était plane et uniquement percée d'une ouverture destinée à recevoir une extension cylindrique du boîtier 1 pour assurer le positionnement du couvercle 14 sur le boîtier 1 et le centrage de l'arbre d'entraînement de l'accessoire correspondant, dans l'invention c'est le couvercle 14 qui présente une extension cylindrique 18 au niveau du premier engrenage 10 et la face externe du boîtier 1 qui est plane et qui présente une découpe 19 apte à recevoir cette extension 18. Sur cette extension cylindrique, orientée axialement, sont représentés trois bossages percés d'alésages filetés, dans lesquels peuvent s'insérer les moyens de fixation 17 de la bague extérieure 16 du roulement à rouleaux du premier engrenage 10. Le centrage de l'arbre d'entraînement 12 au niveau de son roulement à rouleaux est assuré par le couvercle 14, qui est lui-même positionné en référence à une des découpes du boîtier, en association avec un élément du type goupille qui interdit la rotation autour de cette découpe ; dans un mode particulier de réalisation ce positionnement peut être assuré par la coopération de l'extension cylindrique 18 avec la découpe 19 du premier engrenage.

La spécificité de l'invention par rapport à l'art antérieur consiste dans le transfert, du boîtier 1 sur le couvercle correspondant 14, de la fixation de la bague extérieure du roulement à rouleaux. Le fait que l'alliage utilisé pour la réalisation du couvercle 14 soit plus résistant aux températures élevées que celui du boîtier 1 apporte une meilleure tenue des moyens de fixation 17 et l'absence des dégradations rencontrées précédemment.
Il convient en outre de remarquer que la solution proposée pour l'invention permet de réutiliser des boîtiers d'AGB qui ont subi des dommages, après une opération d'usinage de la paroi du boîtier qui recevait la bague extérieure du roulement à rouleaux, pour qu'elle reçoive maintenant l'extensionl8 d'un premier couvercle 14. La réparation d'une AGB endommagée ne nécessite ainsi que la fourniture d'un nouveau premier couvercle 14, sans mise au rebut de tout le boîtier 1.

## Revendications

1. Relais d'accessoires pour turbomachine comportant un boîtier (1) dans lequel est installée au moins une roue d'engrenage (10, 20) pour l'entraînement mécanique d'un accessoire monté sur ledit boîtier, l'engrenage de ladite roue d'engrenage (10,20) étant entraîné par l'intermédiaire d'un arbre d'entrée (11) fournissant le couple nécessaire audit entraînement mécanique, l'arbre d'entrée (11) de ladite roue d'engrenage (10, 20) étant porté par au moins deux roulements, à bille ou à rouleaux, et traversant au moins une des parois dudit boîtier (1) par une ouverture (19) positionnée en vis-à-vis dudit accessoire et fermée par un premier couvercle d'accessoire (14) fixé sur le boîtier (1), pour au moins une des roues d'engrenage (10), son arbre traverse deux parois du boîtier (1) au moyen d'ouvertures fermées par des couvercles (13, 14) fixés sur ledit boîtier, **caractérisé en ce que** ledit couvercle associé audit accessoire comporte une extension cylindrique axiale (18) s'étendant à l'intérieur de ladite ouverture correspondante, et **en ce que** les bagues extérieures (15, 16) desdits deux roulements sont fixées sur l'extension axiale (18), le couvercle (14) étant réalisé dans un métal ou un alliage plus résistant aux températures élevées que celui du boîtier (1).

2. Relais d'accessoires selon la revendication 1 dans lequel ladite roue d'engrenage est couplée à l'arbre d'entrée (11) en sus de son couplage à un accessoire porté par ledit boîtier, la bague extérieure d'un desdits roulements étant fixée sur le couvercle (13) associé à l'arbre d'entrée (11) et la bague extérieure de l'autre roulement étant fixée sur le couvercle (14) associé à l'arbre dudit accessoire.

3. Relais d'accessoires selon l'une des revendications 1 ou 2 dans lequel ladite roue d'engrenage est couplée à un alternateur.

4. Relais d'accessoires selon la revendication 1 dans lequel ladite extension cylindrique axiale (18) coopère avec ladite ouverture correspondante (19) pour assurer le positionnement dudit couvercle (14) sur ledit boîtier (1).

5. Relais d'accessoires selon l'une quelconque des revendications précédentes, **caractérisé en ce que** l'extension axiale (18) comporte des bossages cylindriques orientés axialement et percés d'alésages filetés, recevant des moyens de fixation (17) de la bague extérieure (16) d'un des roulements à rouleaux.

## Patentansprüche

1. Hilfsgetriebe für eine Turbomaschine mit einem Gehäuse (1), in dem mindestens ein Zahnrad (10, 20) für den mechanischen Antrieb eines auf dem Gehäuse montierten Zusatzes angebracht ist, wobei die Zähne des Zahnrades (10, 20) mittels einer Eingangswelle (11) angetrieben werden, die das erforderliche Drehmoment für den mechanischen Antrieb bereitstellt, wobei die Eingangswelle (11) des Zahnrades (10, 20) von mindestens zwei Lagern, Kugel- oder Rollenlager, getragen wird und durch mindestens eine der Wände des Gehäuses (1) durch eine Öffnung (19) hindurchgeht, die dem Zusatz gegenüberliegt und durch eine erste Zusatzabdeckung (14) geschlossen ist, die auf dem Gehäuse (1) befestigt ist, für mindestens eines der Zahnräder (10), dessen Welle durch zwei Wände des Gehäuses (1) mittels Öffnungen hindurchgeht, die durch auf dem Gehäuse befestigte Abdeckungen (13, 14) geschlossen sind, **dadurch gekennzeichnet, dass** die dem Zusatz zugeordnete Abdeckung eine axiale zylindrische Verlängerung (18) aufweist, die sich innerhalb der entsprechenden Öffnung erstreckt, und dass die Außenringe (15, 16) der beiden Lager auf der axialen Verlängerung (18) befestigt sind, wobei die Abdeckung (14) aus einem Metall oder einer Legierung hergestellt ist, die gegenüber hohen Temperaturen beständiger ist als die des Gehäuses (1).

2. Hilfsgetriebe nach Anspruch 1, wobei das Zahnrad zusätzlich zu seiner Kopplung mit einem von dem Gehäuse getragenen Zusatz mit der Eingangswelle (11) gekoppelt ist, wobei der Außenring eines der Lager auf der der Eingangswelle (11) zugeordneten Abdeckung (13) und der Außenring des anderen Lagers auf der der Welle des Zusatzes zugeordneten Abdeckung (14) befestigt ist.

3. Hilfsgetriebe nach einem der Ansprüche 1 oder 2, wobei das Zahnrad mit einem Wechselstromgenerator gekoppelt ist.

4. Hilfsgetriebe nach Anspruch 1, wobei die axiale zylindrische Verlängerung (18) mit der entsprechenden Öffnung (19) zusammenwirkt, um die Positionierung der Abdeckung (14) auf dem Gehäuse (1) sicherzustellen.

5. Hilfsgetriebe nach einem der vorstehenden Ansprüche, **dadurch gekennzeichnet, dass** die axiale Verlängerung (18) zylindrische, axial ausgerichtete und mit Gewindebohrungen gebohrte Naben aufweist, die Befestigungsmittel (17) des Außenrings (16) eines der Rollenlager aufnehmen.

## Claims

1. Accessory gearbox for a turbine engine comprising a housing (1) in which at least one gear wheel (10, 20) is installed to mechanically drive an accessory mounted on said housing, the gear of said gear wheel (10, 20) being driven via an input shaft (11) supplying the torque required for said mechanical drive, the input shaft (11) of said gear wheel (10, 20) being supported by at least two ball or roller bearings, and passing through at least one of the walls of said housing (1) via an opening (19) positioned opposite said accessory and closed by a first accessory cover (14) attached to the housing (1),
for at least one of the gear wheels (10), the shaft thereof passes through two walls of the housing (1) via openings closed by covers (13, 14) attached to said housing,
**characterised in that** said cover associated with said accessory comprises an axial cylindrical extension (18) extending inside said corresponding opening, and **in that** the outer races (15, 16) of said two bearings are attached to the axial extension (18), with the cover (14) being made from a metal or an alloy more resistant to high temperatures than that of the housing (1).

2. Accessory gearbox according to claim 1, wherein said gear wheel is coupled to the input shaft (11) in addition to the coupling thereof to an accessory supported by said housing, the outer race of one of said bearings being attached to the cover (13) associated with the input shaft (11) and the outer race of the other bearing being attached to the cover (14) associated with the shaft of said accessory.

3. Accessory gearbox according to either claim 1 or claim 2, wherein said gear wheel is coupled to an alternator.

4. Accessory gearbox according to claim 1, wherein said axial cylindrical extension (18) cooperates with said corresponding opening (19) in order to ensure the positioning of said cover (14) on said housing (1).

5. Accessory gearbox according to any of the preceding claims, **characterised in that** the axial extension (18) comprises cylindrical bosses oriented axially and pierced with threaded bores, receiving means for attaching (17) the outer race (16) of one of the roller bearings.
